# EUROPÄISCHE PATENTSCHRIFT

(11) **EP 0 772 767 B1**
(45) Veröffentlichungstag und Bekanntmachung des Hinweises auf die Patenterteilung: **18.02.1998**
(21) Anmeldenummer: 95925723.9
(22) Anmeldetag: 20.07.1995
(51) Int. Cl.: G01N 15/08, A61B 19/04

(54) **VORRICHTUNG ZUR ÜBERPRÜFUNG DER POROSITÄT VON DÜNNEN GUMMIPRODUKTEN**
DEVICE FOR TESTING THE POROSITY OF THIN RUBBER PRODUCTS
DISPOSITIF PERMETTANT DE VERIFIER LA POROSITE DE PRODUITS EN CAOUTCHOUC MINCES

(30) Priorität: 23.07.1994 DE 4426225
(43) Veröffentlichungstag der Anmeldung: 14.05.1997
(73) Patentinhaber: Griebel, Robert, Newtown, PA 18940 (US); Gormley, Gregory, Newton, PA 18940 (US)
(72) Erfinder: Griebel, Robert, Newtown, PA 18940 (US); Gormley, Gregory, Newton, PA 18940 (US)
(74) Vertreter: Pöhner, Wilfried Anton, Dr.
(86) Internationale Anmeldenummer: DE9500971
(87) Internationale Veröffentlichungsnummer: WO9603635

(56) Entgegenhaltungen:
- US-A- 4 583 039
- US-A- 5 050 426
- US-A- 5 196 799

## Beschreibung

Die Erfindung bezieht sich auf eine Vorrichtung zur Überprüfung der Porosität von dielektrischen Folien, insbesondere Gummiprodukten, wie Kondomen oder Schutzhandschuhen mit einem Überzughalter aus festem, elektrisch leitendem Material, über den das Gummiprodukt übergestreift ist und einer oder mehreren Außenelektroden, die sich auf der anderen, dem Überzughalter gegenüberliegenden Seite der Haut des Gummiprodukts befinden, wobei der Überzughalter und die Außenelektroden über elektrische Leitungen mit einer Spannungsquelle und einem elektrischen Meßgerät verbunden sind.

Kondome erlangen neben der Empfängnisverhütung mehr und mehr Bedeutung als Infektionsschutz gegen Geschlechtskrankheiten, insbesondere gegen die durch Viren übertragenen Aids-Erkrankung. Dadurch steigen zwangsläufig die Anforderungen an Kondome, da sie selbst für die im Vergleich zu Bakterien wesentlich kleineren Viren undurchlässig sein müssen. Es ist jedoch bekannt, daß Latex, aus dem die Kondome bestehen, in einigen Fällen so große Poren aufweist, daß Viren hindurchdringen können. Der Grund liegt darin, daß Latex aus verschlungenen Makromolekülen aufgebaut ist und eine zerklüftete Oberfläche mit unterschiedlicher Wandstärke ausbildet und punktuell Poren entstehen läßt. Diese Ausbildung der Porosität würde bei Verwendung anderer Materialien, so z.B. bei Polyurethan mit Sicherheit nicht auftreten, jedoch ist als nachteilig anzusehen, daß Polyurethan plastisch und damit nicht gefühlsecht ist.

Da bei der Produktion von Kondomen die Virenundurchlässigkeit nicht gewährleistet werden kann, kommt der Prüfung der einzelnen Kondome nach der Fertigung besondere Bedeutung zu. Untersuchungen haben ergeben, daß etwa 60% der Kondome virenundurchlässig sind, die restlichen jedoch poröse Stellen aufweisen, durch die Viren hindurchtreten können. Somit bieten Kondome keinen 100%-igen Schutz vor Infektionen. Dieses Problem ist auch behandelnden Ärzten bekannt, die bei Operationen wegen des Blutkontaktes regelmäßig zwei Paar Handschuhe überziehen, damit die möglicherweise porösen Stellen räumlich gegeneinander versetzt sind, so daß die Wahrscheinlichkeit der Infektion wesentlich reduziert wird.

Die bestehenden Verfahren, Kondome auf Porosität zu testen, bestehen darin, das Kondom auf einen metallischen Überzughalter aufzuziehen und mit Hilfe einer äußeren Elektrode den elektrischen Widerstand des Kondoms zu messen (siehe etwa US-A-5 050 426). Bei einer bekannten Vorrichtung wird das Kondom dabei in eine leitende Flüssigkeit eingetaucht, wobei die äußere Elektrode die Wandung des Flüssigkeitsbades ist. Die Nachteile dieses Verfahrens sind, daß einerseits eine anschließende Trocknung erforderlich ist und andererseits, daß nur eine Integralmessung über die gesamte Oberfläche erfolgt, was keine Lokalisierung der einzelnen Pore zuläßt.

In einem anderen Verfahren ist die äußere Elektrode ein metallisches Gitter, das unter Hochspannung steht, wobei der Auftreten von Durchschlägen gemessen wird. Der Nachteil besteht darin, daß dieses Meßverfahren nicht zerstörungsfrei ist, da durch die Funkenüberschläge das Latex punktuell zerstört wird. Außerdem wirkt sich die Ausbildung von Ozon nachteilig aus.

Demgegenüber hat sich die Erfindung zur Aufgabe gemacht, eine Vorrichtung zum Überprüfen der Porosität von Kondomen so auszubilden, daß einzelne Poren mit einem Durchmesser von 1 - 3 µinch (25 - 75 nm) festgestellt und lokalisiert werden.

Erfindungsgemäß wird die Aufgabe dadurch gelöst, daß die Außenelektroden punktförmig sind, die Außenelektroden und der Überzughalter relativ gegeneinander beweglich sind, so daß die Haut des Gummiprodukts sukzessive von den Außenelektroden abrastbar ist, die von der Spannungsquelle erzeugte Spannung zwischen dem Überzughalter und den Außenelektroden eine Wechselspannung ist, das Meßgerät den Stromfluß in jeder einzelnen Elektrode mißt und bei einem Meßwert der in etwa einem Referenzwert für den materialfreien Zustand ohne überzogenem Gummiprodukt entspricht, einen Defekt anzeigt.

Der wesentliche Grundgedanke der Erfindung ist, daß nicht mit einer großflächigen Außenelektrode gearbeitet wird, sondern daß Punktelektroden verwendet werden. Da jede einzelne Elektrode meßtechnisch ausgewertet wird, ist es möglich, einzelne Poren zu detektieren, anzuzeigen und damit zu lokalisieren. Zur Überprüfung der gesamten Oberfläche eines Kondoms wird sie von den Außenelektroden abgerastert, d.h., daß jeder Punkt der Oberfläche des Kondoms mindestens einmal während des Meßvorgangs einen bestimmten, von den Meßparametern abhängigen Maximalabstand zu einer der Außenelektroden unterschritten haben muß. Zwischen den Außenelektroden und dem Überzughalter liegt eine Wechselspannung an, was wegen der Kapazität zwischen den Außenelektroden und dem Überzughalter einen Wechselstrom zur Folge hat, der für jede Außenelektrode separat gemessen wird. Alternativ ist die Verwendung einer pulsierenden Gleichspannung beliebiger Polung möglich. Da Latex eine von Luft verschiedene relative Dielektrizitätszahl besitzt, weisen die Stellen, an denen kein Latex vorhanden ist, eine andere Kapazität auf als Stellen mit Latexüberzug. Das Meßverfahren ist so fein, daß bereits Poren einer Größe von 10 µm eine solche Kapazitätsänderung zur Folge haben, daß sie vom Meßgerät durch Erfassen des Stromflusses ermittelt wird. Ergibt die Auswertung der einzelnen Ströme der Außenelektroden einen Defekt, so erfolgt eine Anzeige des Meßgeräts. Tatsächlich werden beim sukzessiven Vermessen aufgrund der Existenz von Poren größerer und kleinerer Durchmesser im Vergleich zwischen den einzelnen Meßpunkten in etwa kontinuierliche Übergänge erhalten. Durch Eichung lassen sich jeweils die entsprechenden Porendurchmesser zuordnen. Durch Vorgabe eines Schwellenwertes können alle Poren oberhalb des durch den Schwellenwert vorgegebenen Mindestdurchmessers erfaßt und angezeigt werden. Durch Abrastern wird die gesamte Oberfläche des Produktes erfaßt; bei Einhaltung eines konstanten Abstandes der Elektroden gegeneinander sind die Meßwerte unmittelbar miteinander vergleichbar, andernfalls muß eine Umrechnung zur Normierung erfolgen.

Die Vorteile der Erfindung sind vor allen Dingen darin zu sehen, daß einzelne Poren detektiert werden können und daß die Messung zerstörungsfrei ist.

Wegen der hohen auftretenden Spannungen empfiehlt sich aus Sicherheitsgründen entweder den Überzughalter oder die Außenelektroden auf Masse zu legen.

Die Abrasterung des Kondoms kann besonders zweckmä-ßig gestaltet werden, wenn sich der Überzughalter um seine Rotationsachse dreht, was zur Folge hat, daß die Außenelektroden nicht umständlich um den Überzughalter kreisen müssen sondern raumfest gehalten werden können.

Eine weitere Erleichterung des Meßverfahrens ergibt sich, wenn die Außenelektroden in einem Elektrodenhalter zusammengefaßt sind, so daß die Außenelektroden gemeinsam von einem Antrieb bewegt werden können.

Eine bevorzugte Anordnung der Außenelektroden auf der Elektrodenhalterung ist die Aneinanderreihung der Außenelektroden entlang einer Geraden, wobei benachbarte Außenelektroden einen konstanten Abstand aufweisen, was den Vorteil hat, daß sehr schnell große Bereiche abgerastert werden können.

In einer Weiterbildung der Erfindung sind mehrere Reihen längsseitig gegeneinander versetzt, so daß jeweils die Zwischenräume der Elektrodenreihen erfaßt werden. Beim Verschieben eines solchen Elektrodenhalters senkrecht zum Verlauf der Reihen relativ zum Kondom werden die überstrichenen Bereiche flächendeckend ausgemessen.

Vorteilhafterweise verlaufen die Reihen parallel zu der Rotationsachse des Überzughalters, da es wegen der Drehung des Überzughalters nicht effektiv ist, daß die Außenelektroden das Kondom ringförmig umlaufen, da durch die Drehung ohnehin alle Punkte, die auf dem von der Außenelektrode tangierten Ring liegen, erreicht werden.

In der Regel reicht es aus, zwei Reihen von Außenelektroden um den halben Elektrodenabstand zu versetzen, um eine flächendeckende Ausmessung zu ermöglichen.

Bei rotierendem Überzughalter bietet sich zusätzlich an, den Elektrodenhalter parallel zur Rotationsachse des Überzughalters auf und ab zu bewegen, um die Anzahl der von den Außenelektroden überstrichenen Punkte der Kondomoberfläche zu erhöhen.

Diese Hubbewegung des Elektrodenhalters kann vorteilhafterweise durch ein Kurvengetriebe realisiert werden.

Um die Ozonbildung zu vermindern, die bei den hohen angelegten Spannungen zwangsläufig auftritt, wird in einer Weiterbildung ein Schutzgas, insbesondere Stickstoff zwischen die Außenelektroden und die Kondomoberfläche eingeleitet. Diese Schutzgaszuführung kann in den Elektrodenhalter integriert sein.

Im Stande der Technik wurde bereits die materialzerstörende Wirkung von Funkenüberschlägen erläutert. Um deren Ausbildung sowie die von Ozon zu unterdrücken, ist eine sorgfältige Regelung der Schutzgaszufuhr notwendig, die zweckmäßig durch eine automatische Steuervorrichtung erfolgt. Neben der Durchflußmenge des Gases wird bevorzugt seine Temperatur und Feuchtigkeit erfaßt, da hohe Werte dieser Parameter eine Funkenbildung begünstigen. Entsprechende Sensoren lassen sich entweder in der Gaszufuhr oder nahe der Elektroden anordnen. Bei einer aus Kostengründen vorteilhaften Minimierung des Gasstromes lassen sich damit Überschläge und Ozonbildung verhindern.

Weiterhin empfiehlt sich zum gleichen Zweck die Anbringung eines in Richtung auf das Gummiprodukt und damit den Überzughalter weisenden elektrischen Isolators auf den Außenelektroden. Eines der bevorzugten Materialien ist hierfür Aluminiumoxid (Al₂O₃), das sich in sehr dünnen und qualitativ hochwertigen Schichten aufbringen läßt.

Ist eine erhöhte Präzision der Messungen erforderlich, etwa zum Nachweis feinster Poren, kann sich die Isolation, die ihrerseits eine möglicherweise mit Fehlern oder Dickenvariationen versehene dielektrische Schicht darstellt, störend auf die Messungen auswirken. Insbesondere in diesem Fall bietet es sich an, keine Isolierung anzubringen, d.h. Außenelektroden mit elektrisch leitfähiger Oberfläche zu verwenden.

Weitere Einzelheiten, Merkmale und Vorteile der Erfindung lassen sich dem nachfolgenden Beschreibungsteil entnehmen, in dem anhand der Zeichnung ein Ausführungsbeispiel der Erfindung näher erläutert wird. Es zeigen in schematischer Darstellung
- Figur 1: Kondomprüfvorrichtung mit drehbarem Überzughalter im Querschnitt entlang der Rotationsachse des Überzugshalters
- Figur 2: ausschnittsweiser Querschnitt durch einen Elektrodenhalter
- Figur 3: stark vergrößerter Ausschnitt eines an dem Überzughalter anliegenden Kondoms

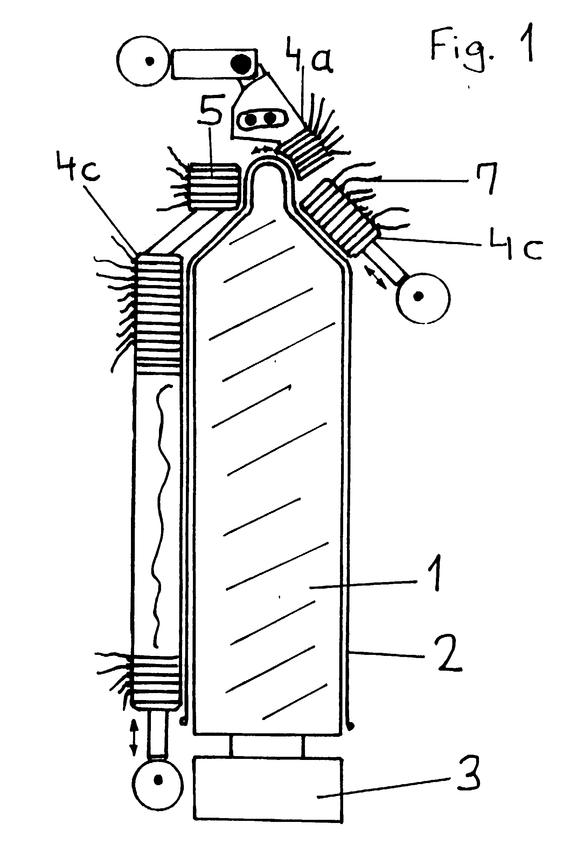

In Figur 1 ist ein rotationssymmetrischer, im wesentlichen kreiszylinderförmiger und in einer abgerundeten Spitze auslaufender Überzughalter (1) dargestellt, auf dem ein Kondom (2) abgerollt ist. An dem der abgerundeten Spitze des Überzughalters (1) entgegengesetzten Ende ist dieser mit einem Rotationsantrieb (3) verbunden. Unmittelbar an der abgerundeten Spitze des Überzughalters (1) befindet sich an der dem Überzughalter (1) gegenüberliegenden Seite des Kondoms (2) ein entsprechend abgerundeter kleiner Elektrodenhalter (4a) mit in Reihe angeordneten Außenelektroden (5). Der Abschnitt von der Spitze bis zum geraden, zylinderförmigen Teil des Überzughalters (1) wird von einem mittleren Elektrodenhalter (4b) überstrichen, dessen Außenelektroden (5) entlang einer Geraden von der Spitze bis zum Beginn des geraden Teils des Überzughalters (1) aufgereiht sind. Schließlich wird der gerade zylinderförmige Teil des Überzughalters (1) von einem großen Elektrodenhalter (4c) abgerastert, dessen Außenelektroden (5) sich auf einer Geraden parallel zur Rotationsachse des Überzughalters (1) befinden. Alle Elektrodenhalter (4a, 4b, 4c) stehen mit einem Kurvengetriebe (6) in Verbindung, daß sie entlang der Reihen der Außenelektroden (5) auf und ab bewegt. Jede einzelne Außenelektrode (5) ist über eine elektrische Leitung (7) mit dem Meßgerät (nicht dargestellt) verbunden.

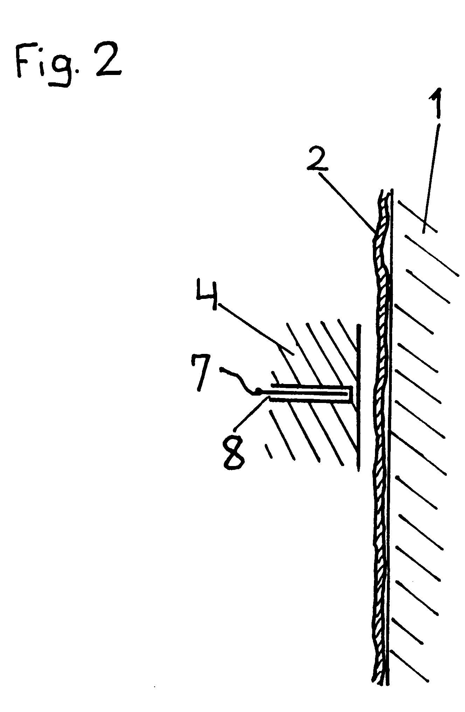

Figur 2 zeigt einen Ausschnitt aus einem der drei Elektrodenhalter (4a, 4b, 4c). Die Außenelektrode (5) selbst ist eine Platte, die an der Oberfläche des Elektrodenhalters (4a, 4b, 4c) anliegt. Sie ist mit einer elektrischen Leitung (7) verbunden, die durch eine Bohrung (8) durch den Elektrodenhalter (4a, 4b, 4c) zu der gegenüberliegenden Seite geführt ist und bis zum Meßgerät (nicht dargestellt) geführt ist. Von der Außenelektrode (5) beabstandet befindet sich das über den Überzughalter (1) gerollte Kondom (2).

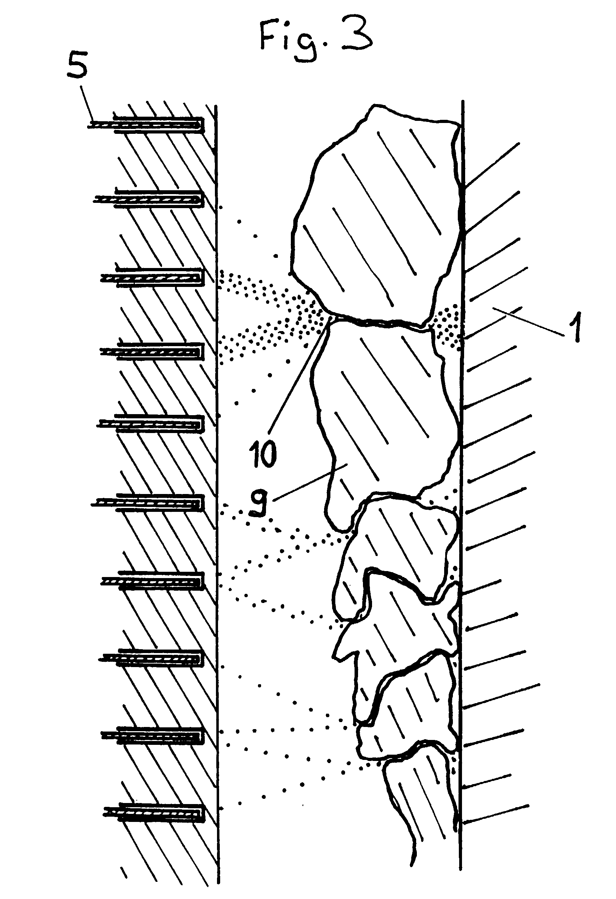

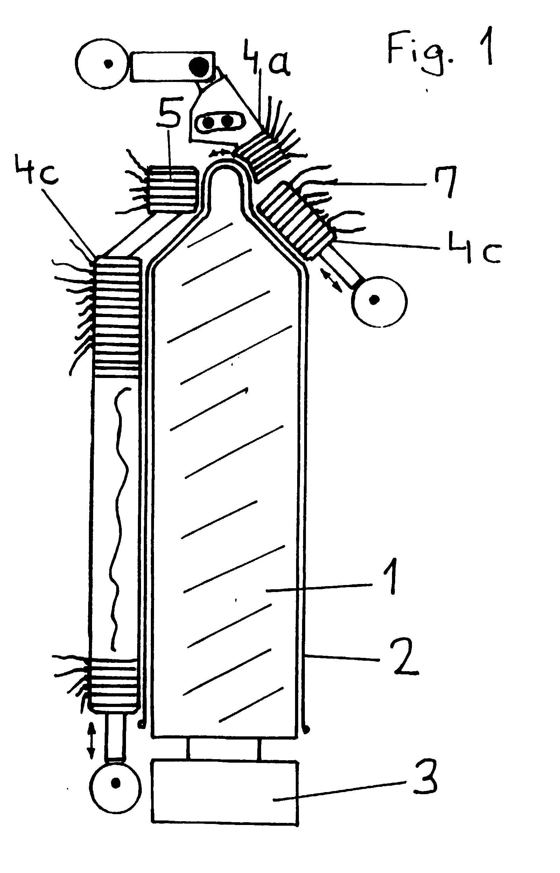

In Figur 3 ist ein über den Überzughalter (1) abgerolltes Kondom (2) stark vergrößert dargestellt. Das Kondom (2) ist auch verschlungenen und zerklüfteten Makromolekülen (9) aufgebaut und weist an einer Stelle eine relativ große Pore (10) auf. Über dem Kondom (2) befinden sich äquidistant angeordnete Außenelektroden (5). Das wegen der Pore (10) relativ inhomogene elektrische Feld zwischen den Außenelektroden (5) und dem Überzughalter (1) ist durch Feldlinien angedeutet. Bei hinreichend großer angelegter Spannung entsteht eine elektrische Entladung, deren Aussehen insbesondere davon abhängt, ob eine Wechselspannung oder eine pulsierende Gleichspannung mit festlegbarer Polungsrichtung Verwendung findet.

## Patentansprüche

1. Vorrichtung zur Überprüfung der Porosität von dielektrischen Folien, insbesondere Gummiprodukten, wie Kondomen (2) oder Schutzhandschuhen mit einem Überzughalter aus festem, elektrisch leitendem Material, über den das Gummiprodukt übergestreift ist und einer oder mehreren Außenelektroden (5), die sich auf der anderen, dem Überzughalter gegenüberliegenden Seite der Haut des Gummiprodukts befinden, wobei der Überzughalter (1) und die Außenelektroden (5) über elektrische Leitungen (7) mit einer Spannungsquelle und einem elektrischen Meßgerät verbunden sind, wobei
- die Außenelektroden (5) punktförmig sind,
- die Außenelektroden (5) und der Überzughalter (1) relativ gegeneinander beweglich sind, so daß die Haut des Gummiprodukts sukzessive von den Außenelektroden (5) abgerastert werden kann,
- die von der Spannungsquelle erzeugte Spannung zwischen dem Überzughalter (1) und den Außenelektroden (5) eine Wechselspannung oder eine pulsierende Gleichspannung ist,
- das Meßgerät den Stromfluß in jeder einzelnen Elektrode mißt und bei einem Meßwert, der in etwa einem Referenzwert für den materialfreien Zustand ohne überzogenem Gummiprodukt entspricht, einen Defekt anzeigt.

2. Vorrichtung nach Anspruch 1, **dadurch gekennzeichnet,** daß entweder der Überzughalter (1) oder die Außenelektroden (5) elektrisch auf Erdpotential liegen.

3. Vorrichtung nach einem der Ansprüche 1 oder 2, **dadurch gekennzeichnet**, daß der Überzughalter (1) rotationssymmetrisch ist und daß ein Rotationsantrieb (3) den Überzughalter (1) um seine Rotationsachse dreht.

4. Vorrichtung nach einem der Ansprüche 1 bis 3, **dadurch gekennzeichnet,** daß mehrere Außenelektroden (5) in einem Elektrodenhalter (4a, 4b, 4c) zusammengefaßt sind.

5. Vorrichtung nach Anspruch 4, **dadurch gekennzeichnet,** daß die Außenelektroden (5) in geraden Reihen angeordnet sind.

6. Vorrichtung nach Anspruch 5, **dadurch gekennzeichnet**, daß der Elektrodenhalter (4a, 4b, 4c) zumindest zwei parallele Reihen von Außenelektroden (5) aufweist, wobei der Elektrodenabstand entlang der Reihen identisch ist und die Reihen relativ gegeneinander um einen Betrag in Längsrichtung versetzt sind, der kleiner dem Elektrodenabstand ist.

7. Vorrichtung nach Anspruch 6, **dadurch gekennzeichnet**, daß der Elektrodenhalter (4a, 4b, 4c) zwei Reihen von Außenelektroden (5) aufweist, die um die Hälfte des Elektrodenabstandes versetzt sind.

8. Vorrichtung nach dem Anspruch 3 und einem der Ansprüche 4 bis 7, **dadurch gekennzeichnet,** daß die Reihen der Außenelektroden (5) näherungsweise parallel zur Rotationsachse des Überzughalters (1) verlaufen und derart mit dem Elektrodenhalter (4a, 4b, 4c) verbunden sind, daß sie einen annäherungsweise gleichen Abstand zum Gummiprodukt aufweisen.

9. Vorrichtung nach Anspruch 3 und einem der Ansprüche 4 bis 8, **dadurch gekennzeichnet,** daß der Elektrodenhalter (4a, 4b, 4c) mit einem oszillierenden Antrieb in Verbindung steht, der diesen entlang der Haut des Gummiprodukts und im wesentlichen parallel zur Rotationsachse des Überzughalters (1) bewegt und einen Hub aufweist, der kleiner oder gleich dem Elektrodenabstand ist.

10. Vorrichtung nach Anspruch 9, **dadurch gekennzeichnet**, daß der Antrieb ein Kurvengetriebe (6) mit exzentrischer Kurvenscheibe beinhaltet.

11. Vorrichtung nach einem der Ansprüche 1 bis 10, **gekennzeichnet durch** eine Schutzgaszuführung, die Schutzgas, insbesondere Stickstoff, zwischen die Außenelektroden (5) und die Haut des Gummiprodukts leitet.

12. Vorrichtung nach Anspruch 11, **dadurch gekennzeichnet**, daß die Schutzgaszuführung in den Elektrodenhalter (4a, 4b, 4c) integriert ist.

13. Vorrichtung nach Anspruch 11 oder 12, **dadurch gekennzeichnet,** daß Sensoren Feuchtigkeit und/oder Temperatur des Schutzgases erfassen und eine mit den Sensoren verbundene Steuervorrichtung die Durchflußmenge des Gases und/oder seine Temperatur regelt.

14. Vorrichtung nach einem der Ansprüche 1 bis 13, **dadurch gekennzeichnet,** daß die Außenelektroden (5) in Richtung auf das Gummiprodukt mit einer elektrisch isolierenden Schicht versehen sind.

15. Vorrichtung nach einem der Ansprüche 1 bis 14, **dadurch gekennzeichnet,** daß die Außenelektroden (5) in Richtung auf das Gummiprodukt an ihrer Oberfläche elektrisch leitfähig sind.

## Claims

1. Device for checking the porosity of dielectric foils, particularly rubber products, such as condoms (2) or protective gloves, which have a cover holder made of durable, electrically conductive material and over which the rubber product is placed, and of one or more outer electrodes (5) that are on the side of the skin of the rubber product opposite the cover holder, whereby the cover holder (1) and the outer electrodes (5) are connected to a source of voltage and an electrical gauge via electrical currents (7). **Through this it will be indicated that**
- the outer electrodes (5) are in the form of points,
- the outer electrodes (5) and the cover holder (1) are relatively moveable toward one another so that the skin of the rubber product is gradually scanned by the outer electrodes (5), in segments
- the voltage produced from the source of voltage between the cover holder (1) and the outer electrodes (5) is an alternating, current or pulsating direct current,
- the gauge measures the flow of current in each electrode and by this measurement corresponds to the electrode in a reference measurement in an absence of material without the application of a rubber product, thereby showing a defect.

2. Device in accordance with Claim 1, **through which it will be indicated that** either the cover holder (1) or the outer electrodes (5) are electrically on ground potential.

3. Device in accordance with one of the Claims 1 or 2, **through which it will be indicated that** the cover holder (1) is rotation symmetrical and that the rotation drive turns the cover holder around its rotation axis.

4. Device in accordance with Claims 1 to 3, **through which it will be indicated that** several outer electrodes (5) are concentrated in an electrode holder (4a,4b,4c).

5. Device in accordance with Claim 4, **through which it will be indicated that** the outer electrodes are arranged in straight rows.

6. Device in accordance with Claim 5, **through which it will be indicated that** the electrode holder (4a,4b,4c) shows at least two parallel rows of outer electrodes (5), whereby the distance between electrodes along the rows is identical and the rows are set relative to one another at a quantity in a longitudinal direction, the quantity being smaller than the distance between electrodes.

7. Device in accordance with Claim 6, **through which it will be indicated that** the electrode holder (4a,4b,4c) shows two rows of outer electrodes, which are set halfway at the distance between electrodes.

8. Device in accordance with Claim 3 and one of the Claims 4 to 7, **through which it will be indicated that** the rows of outer electrodes (5) run approximately parallel to the rotation axis of the cover holder (1) and are connected to the electrode holder (4a,4b,4c) in such a way that they show an approximately equal distance to the rubber product.

9. Device in accordance with Claim 3 and one of the Claims 4 to 8, **through which it will be indicated that** the electrode holder (4a,4b,4c) is connected to the oscillating drive, moving this along the skin of the rubber product essentially parallel to the rotation axis of the cover holder (1), thereby showing a lift which is smaller than or equal to the distance between electrodes.

10. Device in accordance with Claim 9, **through which it will be indicated that the** drive comprised curve gears (6) with an eccentric curbe wheel.

11. Device in accordance with one of the Claims 1 to 10 **indicated through** a protective gas supply which conducts protective gas, particularly nitrogen, between the outer electrodes (5) and the skin of the rubber product.

12. Device in accordance with Claim 11, **through which it will be indicated that** the protective gas supply is integrated in the electrode holder (4a,4b,4c).

13. Device in accordance with Claims 11 or 12, **through which it will be indicated that** sensors meter the humidity and/or the temperature of the protective gas, and a control mechanism which is linked to the sensors controles the quantity of the passing gas and/or its temperature.

14. Device in accordance with Claims 1 to 13, **through which it will be indicated that** the outer electrodes (5) directed to the rubber product are provided with an electrically isolated layer.

15. Device in accordance with Claims 1 to 14, **through which it will be indicated that** the surface of the outer electrodes (5) directed to the rubber product is electrically conductive.

## Revendications

1. Dispositif destiné à vérifier la porosité de feuilles diélectriques, en particulier de produits en caoutchouc comme des préservatifs (2) ou des gants protecteurs avec un porte-objet en un matériaux solide conducteur d'électricité sur lequel est mis le produit en caoutchouc et une ou plusieurs électrodes externes (5) qui font face au porte-objet donc à la surface externe du produit en caoutchouc, le porte-objet (1) et les électrodes externes (5) étant reliées par des conduites électriques (7) à un appareil de mesure électrique et à une source de tension, **caractérisé en ce que**
- les électrodes externes (5) sont ponctuelles
- les électrodes externes (5) et le porte-objet (1) sont mobiles les uns par rapport aux autres de telle façon que la surface externe du produit en caoutchouc puisse être balayée successivement par les électrodes externes (5),
- la tension produite par la source de tension entre le porte-objet (1) et les électrodes externes (5) est une tension alternative ou une tension continue pulsatoire,
- l'appareil de mesure mesure le flux de courant dans chacune des électrodes et pour une valeur de mesure qui correspond à peu près à une valeur de référence pour un état nu, donc sans produit en caoutchouc mis, il indique une erreur.

2. Dispositif selon la revendication 1, **caractérisé en ce que** ou bien le porte-objet (1) ou les électrodes externes (5) sont mises électriquement sur le potentiel du sol.

3. Dispositif selon une des revendications 1 ou 2, **caractérisé en ce que** le porte-objet (1) a une rotation symétrique et qu'un entraînement rotatif (3) fait tourner le porte-objet (1) sur son axe de rotation.

4. Dispositif selon une des revendications 1 ou 3, **caractérisé en ce que** plusieurs électrodes externes (5) sont rassemblées dans un support d'électrodes (4a, 4b, 4c).

5. Dispositif selon la revendication 4, **caractérisé par le fait que** les électrodes externes (5) sont disposées en ligne.

6. Dispositif selon la revendication 5, **caractérisé en ce que** le support d'électrodes (4a, 4b, 4c) présente au moins deux rangées parallèles d'électrodes externes (5), les électrodes de chacune des rangées étant équidistantes entre elles, l'une des rangées étant décalée en longueur par rapport à l'autre d'une valeur inférieure à l'intervalle existant entre deux électrodes.

7. Dispositif selon la revendication 6, **caractérisé en ce que** le support d'électrodes (4a, 4b, 4c) présente deux rangées d'électrodes externes (5), l'une des rangées étant décalée par rapport à l'autre de la moitié de l'intervalle existant entre les électrodes.

8. Dispositif selon la revendication 3 et l'une des revendications 4 à 7, **caractérisé en ce que** les rangées d'électrodes externes (5) sont disposée de façon pratiquement parallèle à l'axe de rotation du porte-objet (1) et sont reliées avec le porte-objet (1) de telle façon qu'elle sont pratiquement équidistantes du produit en caoutchouc.

9. Dispositif selon la revendication 3 et l'une des revendications 4 à 8, **caractérisé en ce que** le support d'électrodes (4a, 4b, 4c) est relié à une commande oscillante qui le bouge le long de la surface du produit en caoutchouc et ce, de façon pratiquement parallèle à l'axe de rotation et que l'élévation est inférieure ou égale l'intervalle existant entre les électrodes.

10. Dispositif selon la revendication 9, **caractérisé en ce que** la commande est une commande à came (6) avec disque à came excentrique.

11. Dispositif selon l'une des revendications 1 à 10, **caractérisé par** une alimentation en gaz de protection qui amène des gaz de protection, en particulier de l'azote entre les électrodes externes (5) et la surface externe du produit en caoutchouc.

12. Dispositif selon la revendication 11, **caractérisé en ce que** l'amenée en gaz de protection est intégrée dans le support d'électrodes (4a, 4b, 4c).

13. Dispositif selon la revendication 11 ou 12, **caractérisé en ce que** des détecteurs saisissent l'humidité et/ou la température du gaz de protection et qu'un dispositif de commande relié aux détecteurs règle la quantité de passage du gaz et/ou sa température.

14. Dispositif selon l'une des revendications 1 à 13, **caractérisé en ce que** les électrodes externes (5) sont revêtues dans la direction du produit en caoutchouc d'une couche isolant l'électricité.

15. Dispositif selon une des revendications 1 à 14, **caractérisé par le fait que** les électrodes externes (5) sont en direction du produit en caoutchouc conductrices d'électricité en leur surface.
